# EUROPEAN PATENT APPLICATION

(11) **EP 4 806 812 A1**
(43) Date of publication of application: **16.09.2026**
(21) Application number: 24921366.1
(22) Date of filing: 09.08.2024
(51) Int. Cl.: B65G 47/74

(54) **TROLLEY POSITIONING DEVICE AND BATTERY MANUFACTURING APPARATUS**

(30) Priority: 29.01.2024 CN 202410121411
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: GAO, Xitang, Ningde, Fujian 352100 (CN); YU, Chenqin, Ningde, Fujian 352100 (CN); YANG, Chenghua, Ningde, Fujian 352100 (CN); JIANG, Chaoqun, Ningde, Fujian 352100 (CN); YAO, Xingyu, Ningde, Fujian 352100 (CN); LIU, Hailong, Ningde, Fujian 352100 (CN)
(74) Representative: Lorenz Seidler Gossel Part. mbB
(86) International application number: PCT/CN2024/111186
(87) International publication number: WO 2025/161337

(57) **Abstract**

The present application relates to the field of automation equipment. Provided in the embodiments of the present application are a trolley positioning device and a battery manufacturing apparatus. The trolley positioning device (100) comprises: a loading trolley (10); and a positioning device (20), comprising a guiding structure (21) and a positioning structure (22), wherein the guiding structure (21) is configured to guide the loading trolley (10), such that the loading trolley (10) travels in a first direction; and the positioning structure (22) is arranged on the side of the guiding structure (21) in the first direction, and the positioning structure (22) is configured to fix the loading trolley (10). The trolley positioning device provided in the embodiments of the present application improves the positioning accuracy of the loading trolley.

## Description

The present application claims priority to Chinese Patent Application No. 202410121411.X, filed with China National Intellectual Property Administration on January 29, 2024 and entitled "TROLLEY POSITIONING APPARATUS AND BATTERY MANUFACTURING DEVICE", which is incorporated herein by reference in its entirety.

### TECHNICAL FIELD

The present application relates to the technical field of automation devices, and in particular, to a trolley positioning apparatus and a battery manufacturing device.

### BACKGROUND

Loading trolleys are widely used in various manufacturing devices. For example, a loading trolley is required to load batteries in a battery manufacturing device. However, a conventional loading trolley usually cannot accurately stop at a preset position, and the positioning accuracy of the loading trolley needs to be improved.

### SUMMARY

In view of this, embodiments of the present application provide a trolley positioning apparatus and a battery manufacturing device, to improve the positioning accuracy of a loading trolley.

An embodiment of a first aspect of the present application provides a trolley positioning apparatus, including:
a loading trolley; and
a positioning apparatus, including a guide structure and a positioning structure, where the guide structure is configured to guide the loading trolley, such that the loading trolley travels along the guide structure; the positioning structure is configured to fix the loading trolley.

The trolley positioning apparatus provided by the embodiments of the present application includes a loading trolley and a positioning apparatus. The positioning apparatus includes a guide structure and a positioning structure. The guide structure can guide the loading trolley, such that the loading trolley travels along the guide structure; in this way, the loading trolley can travel along a preset path, which improves the movement accuracy of the loading trolley. In addition, the positioning structure can fix the loading trolley after the loading trolley moves to a preset position, such that the loading trolley stops at the preset position. Therefore, the trolley positioning apparatus can guide and position the loading trolley, thereby improving the positioning accuracy of the loading trolley, enabling the loading trolley to accurately stop at the preset position, and facilitating the accurate operation of the items on the loading trolley.

In some embodiments, the guide structure extends in a first direction, and the positioning structure includes a positioning bracket and a fine positioning member arranged on the positioning bracket; a positioning mating member is arranged on the loading trolley, and the fine positioning member is configured to be engaged with the positioning mating member.

The positioning structure provided by the embodiments of the present application includes a positioning bracket and a fine positioning member. The positioning bracket can stop the loading trolley, and the fine positioning member can be clamped with the positioning mating member on the loading trolley, such that the positioning structure performs fine adjustment on the position of the loading trolley, and the positioning structure plays a fine positioning role, thereby further improving the positioning accuracy of the loading trolley.

In some embodiments, a side of one of the fine positioning member and the positioning mating member in the first direction is concavely provided with a clamping groove, a side of the other of the fine positioning member and the positioning mating member in the first direction is provided with a clamping protrusion, and the clamping protrusion can be fitted into the clamping groove.

By adopting the above technical solution, when the loading trolley moves to the positioning bracket, the clamping protrusion on the positioning mating member is fitted into the clamping groove in the fine positioning member, which can not only achieve position correction of the loading trolley, but also fix the loading trolley.

In some embodiments, the clamping groove includes two guide walls and a bottom wall connected between the two guide walls, the two guide walls are arranged opposite to each other in a second direction and are obliquely connected to the bottom wall, the second direction intersects with the first direction, and a width of the clamping groove gradually decreases in the first direction toward a direction away from the positioning mating member.

By adopting the above technical solution, in the process that the clamping protrusion is gradually inserted into the clamping groove, the two guide walls of the clamping groove can guide the positioning mating member, such that the position of the positioning mating member in the second direction is finely adjusted, and then the position of the loading trolley in the second direction is finely adjusted. Therefore, the fine positioning member can not only limit the loading trolley in the traveling direction of the loading trolley, but also calibrate the position of the loading trolley in the second direction, thereby achieving an accurate alignment effect and further improving the positioning accuracy of the loading trolley.

In some embodiments, the guide structure includes two guide bars arranged opposite to and spaced apart from each other, the guide bars extend in the first direction, and a guide gap extending in the first direction is formed between the two guide bars; a bottom of the loading trolley is provided with a guide mating member, and the guide mating member can slide in the guide gap.

By adopting the above technical solution, the guide structure can guide the guide mating member at the bottom of the loading trolley by using the two guide bars, which facilitates the loading trolley to reach an accurate preset position; in addition, the guide structure has the advantages of a simple structure and easy implementation.

In some embodiments, the guide mating member is a positioning bearing.

The guide mating member provided by the embodiments of the present application is a positioning bearing. The positioning bearing can slide smoothly between the two guide bars, and the guide structure cooperates with the guide mating member, such that the loading trolley can be guided without causing large friction to the loading trolley, thereby facilitating smooth movement of the loading trolley to the preset position.

In some embodiments, a side of the guide bar facing the guide gap is provided with an arc-shaped guide surface, and the arc-shaped guide surface is located at an end portion of the guide bar facing away from the fine positioning member. A spacing between the two arc-shaped guide surfaces gradually decreases in a direction in which the first direction points to the fine positioning member.

By adopting the above technical solution, an end portion of the guide structure is provided with an arc-shaped guide surface, which can guide the guide mating member to smoothly enter the guide gap, so as to adjust the traveling direction of the loading trolley to enable the loading trolley to reach the preset position along the guide structure, thereby improving the movement accuracy and the positioning accuracy of the loading trolley.

In some embodiments, the positioning structure further includes a positioning driving member arranged on the positioning bracket and an ejector member connected to the positioning driving member; the positioning driving member is configured to drive the ejector member to move, such that the ejector member applies a force to the loading trolley, and then the loading trolley is fixedly attached to the positioning bracket.

The positioning structure provided by the embodiments of the present application includes a positioning driving member and an ejector member. The positioning driving member can drive the ejector member to move, such that the loading trolley is fixedly attached to the positioning bracket, and the loading trolley can be fixed at the positioning bracket, thereby avoiding displacement and shaking of the loading trolley.

In some embodiments, one end of the ejector member is rotatably connected to the positioning driving member, and the other end thereof is a free end for ejecting the loading trolley; the positioning driving member is configured to drive the ejector member to rotate, such that the free end swings and pushes against the loading trolley.

By adopting the above technical solution, the ejector member can rotate to fix the loading trolley and provide clearance for the loading trolley, thereby facilitating the use.

In some embodiments, the positioning bracket is provided with a sensor, the sensor is configured to sense the loading trolley and send a sensing signal, and the positioning driving member drives the ejector member to move according to the sensing signal.

By providing the sensor, the positioning driving member can control the ejector member to fix the loading trolley in time, thereby improving the positioning efficiency.

In some embodiments, the positioning structure includes a limiting member, the bottom of the loading trolley is provided with a limiting mating member, and the limiting member is configured to clamp the limiting mating member so as to fix the loading trolley at the preset position.

By adopting the above technical solution, the limiting member can clamp the limiting mating member so as to fix the loading trolley at the preset position, thereby achieving accurate positioning of the loading trolley.

In some embodiments, a side of the limiting mating member facing the limiting member is provided with an inclined guide surface and a clamping surface connected with each other in the first direction, a height of the inclined guide surface gradually decreases from an end distal to the clamping surface toward a direction close to the clamping surface, and a height of the clamping surface is lower than the height of the inclined guide surface; the limiting member can enter the clamping surface along the inclined guide surface and abut against the clamping surface.

By adopting the above technical solution, the limiting mating member is provided with an inclined guide surface and a clamping surface, and the limiting member can abut against the clamping surface to prevent the loading trolley from continuing to move, such that the loading trolley is accurately positioned, thereby improving the positioning accuracy of the loading trolley.

In some embodiments, the limiting member includes a mounting member and a universal ball bull eye bearing arranged on the mounting member, and the universal ball bull eye bearing is configured to support and position the limiting mating member.

By adopting the above technical solution, the universal ball bull eye bearing can support and position the limiting mating member. The friction between the universal ball bull eye bearing and the inclined guide surface is small, such that the carrying trolley can smoothly slide above the universal ball bull eye bearing until the highest point of the universal ball bull eye bearing tightly abuts against the abutting surface, thereby achieving a positioning purpose.

In some embodiments, a plurality of the limiting members and a plurality of the limiting mating members are provided, vertexes of a plurality of universal ball bull eye bearings are located in a same horizontal plane but are not all on a same straight line, and the plurality of universal ball bull eye bearings jointly support the loading trolley.

The trolley positioning apparatus not only uses the plurality of limiting members to accurately position the loading trolley, but also keeps the loading trolley horizontal, thus achieving the horizontal correction function.

In some embodiments, two sides of the guide structure in the second direction are each provided with two limiting members, the two limiting members on each side are spaced apart from each other in the first direction; two sides of the loading trolley in the second direction are each provided with two limiting mating members, and the two limiting mating members on each side are spaced apart from each other in the first direction.

In some embodiments, several of the limiting members further include gaskets, the gaskets are detachably arranged between the mounting members and the universal ball bull eye bearings, and the gaskets are configured to increase the height of the universal ball bull eye bearings.

By adopting the above technical solution, gaskets are arranged in several limiting members, such that the vertexes of the plurality of universal ball bull eye bearings are flush and in the same horizontal plane.

In some embodiments, the side of the limiting mating member facing the limiting member is further provided with a limiting surface, the clamping surface and the inclined guide surface are arranged on a same side of the limiting surface, the second direction intersects with the first direction, and the inclined guide surface is recessed relative to the limiting surface.

By adopting the above technical solution, the inclined guide surface forms a groove on the limiting mating member, and when the loading trolley moves on the limiting member, the universal ball bull eye bearing can slide relative to the inclined guide surface and is not easy to deviate, thereby further improving the movement accuracy of the loading trolley.

An embodiment of a second aspect of the present application provides a battery manufacturing device, including the trolley positioning apparatus provided in the first aspect.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in embodiments of the present application, the drawings required for illustrating the embodiments or conventional technologies are briefly described below. Apparently, the drawings in the following description illustrate merely some embodiments of the present application, and those of ordinary skill in the art may still derive other drawings from these drawings without creative efforts.
FIG. 1 is a schematic structural diagram of a trolley positioning apparatus from a first perspective according to some embodiments of the present application;
FIG. 2 is a schematic structural left view of the trolley positioning apparatus shown in FIG. 1;
FIG. 3 is a schematic structural diagram of a trolley positioning apparatus from a second perspective according to some embodiments of the present application;
FIG. 4 is an enlarged structural diagram of part A in the trolley positioning apparatus shown in FIG. 3;
FIG. 5 is an enlarged structural diagram of part B in the trolley positioning apparatus shown in FIG. 3;
FIG. 6 is a schematic structural diagram of a guide structure and a limiting member in the trolley positioning apparatus shown in FIG. 3;
FIG. 7 is a three-dimensional schematic diagram of a partial structure of a loading trolley and the limiting member in the trolley positioning apparatus shown in FIG. 3;
FIG. 8 is a partially enlarged view of part C in FIG. 7; and
FIG. 9 is a schematic structural diagram of a limiting member according to some embodiments of the present application.

Reference numerals in the drawings have the following meanings:
100. trolley positioning apparatus; 10. loading trolley; 11. trolley body; 111. armrest; 112. fixed frame; 12. wheel; 13. limiting mating member; 131. inclined guide surface; 132. clamping surface; 133. limiting surface; 14. guide mating member; 15. positioning mating member; 151. clamping protrusion; 20. positioning apparatus; 21. guide structure; 211. guide bar; 2111. arc-shaped guide surface; 212. guide gap; 213. bottom plate; 22. positioning structure; 221. positioning bracket; 222. fine positioning member; 2221. clamping groove; 22211. guide wall; 22212. bottom wall; 223. positioning driving member; 224. ejector member; 225. sensor; 226. limiting member; 2261. mounting member; 2262. universal ball bull eye bearing; 2263. gasket.

### EMBODIMENTS OF THE PRESENT DISCLOSURE

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "vertical", "horizontal", "top", "bottom", "inner", "outer", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

Loading trolleys are widely used in various manufacturing devices. For example, a loading trolley is required to load batteries in a battery manufacturing device. However, a conventional loading trolley is usually positioned manually, and cannot accurately stop at a preset position; and when a robotic arm subsequently grabs an item on the loading trolley, it is easy to cause mistaken grabbing or grabbing failure. Therefore, the positioning accuracy of the loading trolley needs to be improved.

In order to solve the above problem, a trolley positioning device and a trolley positioning apparatus are designed through in-depth research. The trolley positioning device and the trolley positioning apparatus include a loading trolley and a positioning apparatus, and the positioning apparatus includes a guide structure and a positioning structure. The trolley positioning device and the trolley positioning apparatus provided by the embodiments of the present application guide the traveling of the loading trolley by using the guide structure, such that the loading trolley reaches a preset position according to a predetermined route. The trolley positioning device and the trolley positioning apparatus position the loading trolley by using the positioning structure, such that the loading trolley can be accurately positioned at the preset position. In this way, the trolley positioning device and the trolley positioning apparatus improve the positioning accuracy of the loading trolley, and enable the loading trolley to accurately stop at the preset position.

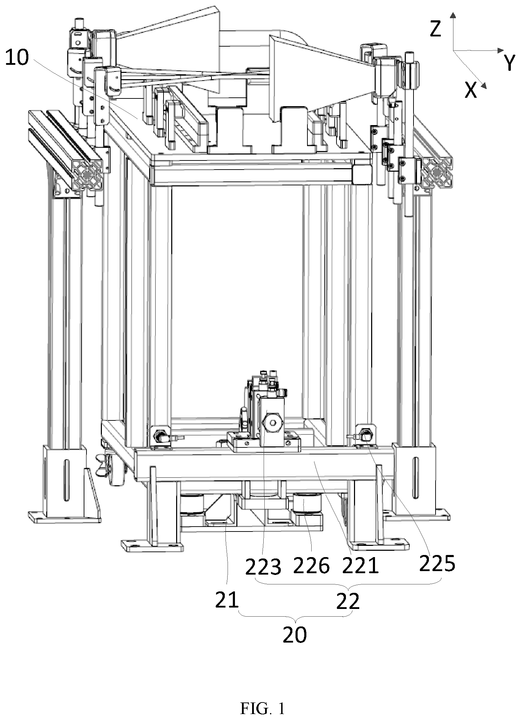

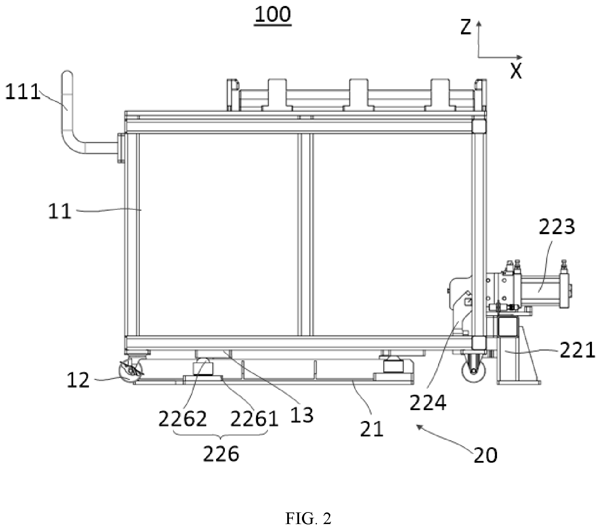

Referring to FIGs. 1 and 2, an embodiment of a first aspect of the present application provides a trolley positioning apparatus 100, including a loading trolley 10 and a positioning apparatus 20. The positioning apparatus 20 includes a guide structure 21 and a positioning structure 22. The guide structure 21 is configured to guide the loading trolley 10, such that the loading trolley 10 travels along the guide structure 21. The positioning structure 22 is configured to fix the loading trolley 10.

The loading trolley 10 is a trolley for loading items. The loading trolley 10 may be a manual trolley, but is not limited thereto. The loading trolley 10 may also be an automatic trolley, such as an automated guided vehicle (AGV).

The positioning apparatus 20 is fixedly arranged at a preset station, and can position the loading trolley 10 traveling to the preset station. The "preset station" is a station set according to production requirements, and the preset station determines a preset position the loading trolley 10 needs to reach. When the loading trolley 10 reaches the preset position, items on the loading trolley 10 can be grabbed or subjected to other operations.

The positioning apparatus 20 includes a guide structure 21 and a positioning structure 22, and both the guide structure 21 and the positioning structure 22 are fixedly arranged at the preset station. The guide structure 21 is configured to guide the loading trolley 10, such that the loading trolley 10 travels along the guide structure 21, and the extension direction of the guide structure 21 is a first direction. In this embodiment, the first direction is an X direction. By guiding the direction of the traveling path of the loading trolley 10, it is beneficial for the loading trolley 10 to accurately reach the preset position. The guide structure 21 may include various elements used for guiding, such as a guide rail and a guiding plate.

The positioning structure 22 is configured to fix the loading trolley 10, such that the loading trolley 10 accurately stops at the preset position. The positioning structure 22 may include various structures capable of fixing the loading trolley 10, such as a positioning member, a clamping member, and a magnetic attraction member.

During use, the loading trolley 10 reaches the region where the positioning apparatus 20 is located, and the loading trolley 10 travels along the guide structure 21 under the guidance of the guide structure 21 until the loading trolley 10 is positioned and fixed by the positioning structure 22, and the loading trolley 10 can stay at the station where the positioning apparatus 20 is located.

The trolley positioning apparatus 100 provided by the embodiments of the present application includes a loading trolley 10 and a positioning apparatus 20. The positioning apparatus 20 includes a guide structure 21 and a positioning structure 22. The guide structure 21 can guide the loading trolley 10, such that the loading trolley 10 travels along the guide structure 21; in this way, the loading trolley 10 can travel along a preset path, which improves the movement accuracy of the loading trolley 10. In addition, the positioning structure 22 can fix the loading trolley 10 after the loading trolley 10 moves to a preset position, such that the loading trolley 10 stops at the preset position. Therefore, the trolley positioning apparatus 100 can guide and position the loading trolley 10, thereby improving the positioning accuracy of the loading trolley 10, enabling the loading trolley 10 to accurately stop at the preset position, and facilitating the accurate operation of the items on the loading trolley 10.

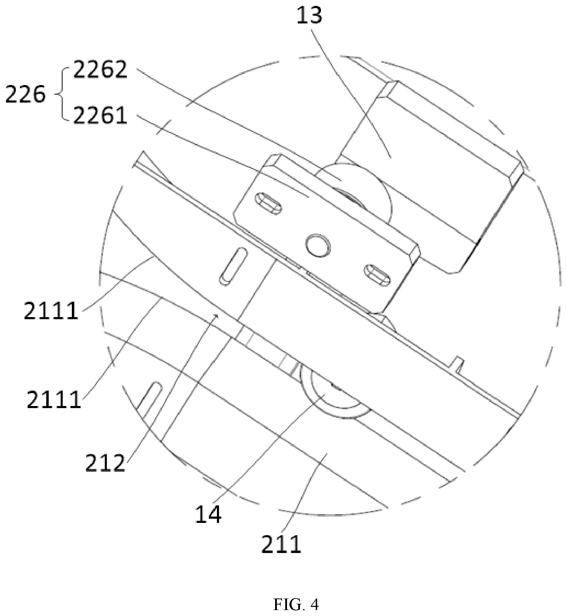

Referring to FIGs. 1 to 5, in some embodiments, the guide structure 21 extends in the first direction X, and the positioning structure 22 includes a positioning bracket 221 and a fine positioning member 222 arranged on the positioning bracket 221; a positioning mating member 15 is arranged on the loading trolley 10, and the fine positioning member 222 is configured to be engaged with the positioning mating member 15.

Optionally, the positioning bracket 221 and the fine positioning member 222 are arranged on one side of the guide structure 21 in the first direction X. It can be understood that the guide structure 21 includes a head end and a tail end arranged in the first direction X, and the loading trolley 10 can move from the head end to the tail end when traveling in the first direction X. In other embodiments, the positioning bracket 221 and the fine positioning member 222 may also be arranged on one side or two sides of the loading trolley in a second direction Y.

The positioning bracket 221 and the fine positioning member 222 are configured to stop the loading trolley 10 and position the loading trolley 10. The positioning bracket 221 is arranged on one side of the guide structure 21 in the first direction X. In this way, when the loading trolley 10 moves to the preset position along the guide structure 21, the loading trolley 10 can be attached to the positioning bracket 221, such that the positioning bracket 221 can stop the loading trolley 10. The fine positioning member 222 may be fixed on the positioning bracket 221. It can be understood that if the positioning position of the loading trolley 10 needs to be adjusted, the fine positioning member 222 may also be movably arranged on the positioning bracket 221. The positioning mating member 15 may be arranged at the bottom of the loading trolley 10, but is not limited thereto. The positioning mating member 15 may also be arranged in the middle or at the top of the loading trolley 10.

The fine positioning member 222 and the positioning mating member 15 can be engaged with each other, such that the fine positioning member 222 can correct the position of the loading trolley 10 and finely adjust the position of the loading trolley 10. In addition, the fine positioning member 222 can also fix the loading trolley 10, and after the fine positioning member 222 and the positioning mating member 15 are engaged with each other, the loading trolley 10 is not easy to shift left or right.

The positioning structure 22 provided by the embodiments of the present application includes a positioning bracket 221 and a fine positioning member 222. The guide structure 21 can guide the loading trolley 10 to travel in the first direction X, and the guide structure 21 plays a rough positioning role. The positioning bracket 221 can stop the loading trolley 10, and the fine positioning member 222 can be engaged with the positioning mating member 15 on the loading trolley 10, such that the positioning structure 22 performs fine adjustment on the position of the loading trolley 10, and the positioning structure 22 plays a fine positioning role, thereby further improving the positioning accuracy of the loading trolley 10.

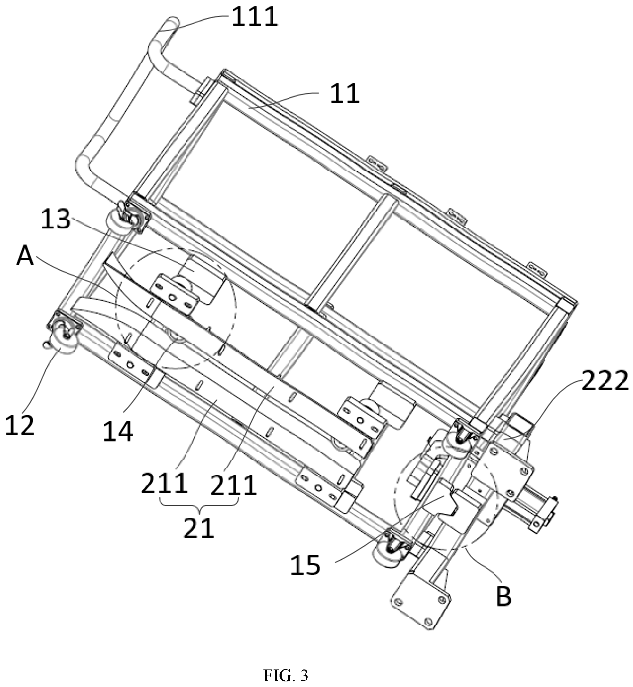

Referring to FIGs. 3, 5, and 7, in some embodiments, a side of one of the fine positioning member 222 and the positioning mating member 15 in the first direction X is concavely provided with a clamping groove 2221, a side of the other of the fine positioning member 222 and the positioning mating member 15 in the first direction X is provided with a clamping protrusion 151, and the clamping protrusion 151 can be fitted into the clamping groove 2221.

The fine positioning member 222 is provided with a clamping groove 2221, and a groove opening of the clamping groove 2221 is arranged on the side of the fine positioning member 222 facing the guide structure 21 in the first direction X. The clamping groove 2221 may be in a square shape, a trapezoidal shape, a triangular shape, or the like. The shape and the size of the clamping protrusion 151 on the positioning mating member 15 are adapted to the shape and the size of the clamping groove 2221, such that the clamping protrusion 151 can be clamped with the clamping groove 2221.

When the loading trolley 10 moves to the positioning bracket 221, the clamping protrusion 151 on the positioning mating member 15 is fitted into the clamping groove 2221 in the fine positioning member 222, thus achieving the position correction of the loading trolley 10, and improving the positioning accuracy of the loading trolley 10.

In other embodiments, the fine positioning member 222 and the positioning mating member 15 are not limited to being clamped with each other in the first direction X; for example, they may be clamped with each other in a vertical direction (a third direction Z) or in the second direction Y.

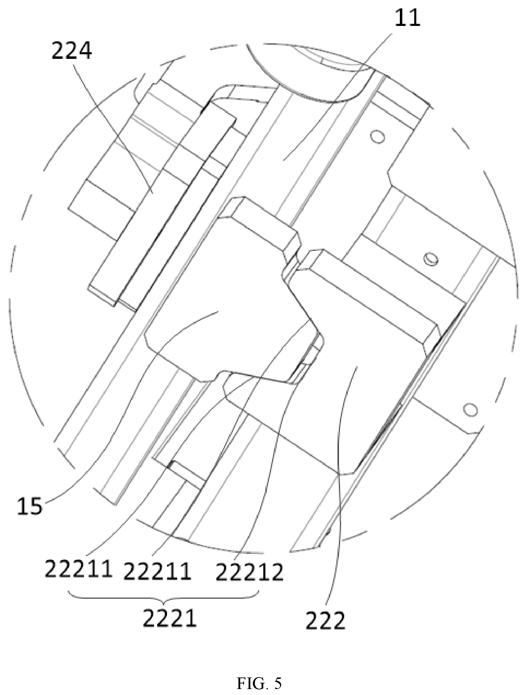

Referring to FIG. 5, in some embodiments, the clamping groove 2221 includes two guide walls 22211 and a bottom wall 22212 connected between the two guide walls 22211. The two guide walls 22211 are arranged opposite to each other in the second direction Y and are obliquely connected to the bottom wall 22212, and the second direction Y intersects with the first direction X.

The extension direction of the guide wall 22211 is arranged obliquely to both the first direction X and the second direction Y, and the width of the clamping groove 2221 gradually decreases in the first direction toward a direction away from the positioning mating member 15, such that the clamping groove 2221 is approximately trapezoidal or dovetail-shaped. Correspondingly, the width of the clamping protrusion 151 gradually decreases in a direction close to the positioning bracket 221.

When the loading trolley 10 moves toward the positioning bracket 221, an end portion of the clamping protrusion 151 is inserted into the clamping groove 2221, and under the guidance of the two guide walls 22211, the clamping protrusion 151 is gradually inserted into the clamping groove 2221 and is engaged with the clamping groove 2221.

Optionally, the clamping groove 2221 is arranged on the fine positioning member 222, and the clamping protrusion 151 is arranged on the positioning mating member 15. In other embodiments, alternatively, the clamping groove 2221 may be arranged on the positioning mating member 15, and the clamping protrusion 151 may be arranged on the fine positioning member 222.

By adopting the above technical solution, in the process that the clamping protrusion 151 is gradually inserted into the clamping groove 2221, the two guide walls 22211 of the clamping groove 2221 can guide the positioning mating member 15, such that the position of the positioning mating member 15 in the second direction Y is finely adjusted, and then the position of the loading trolley 10 in the second direction Y is finely adjusted. Therefore, the fine positioning member 222 can not only limit the loading trolley 10 in the traveling direction (the first direction X) of the loading trolley 10, but also calibrate the position of the loading trolley 10 in the second direction Y, thereby achieving an accurate alignment effect and further improving the positioning accuracy of the loading trolley 10.

Referring to FIGs. 3, 4, and 6, in some embodiments, the guide structure 21 includes two guide bars 211 arranged opposite to and spaced apart from each other, the guide bars 211 extend in the first direction X, and a guide gap 212 extending in the first direction X is formed between the two guide bars 211; the bottom of the loading trolley 10 is provided with a guide mating member 14, and the guide mating member 14 can slide in the guide gap 212.

The two guide bars 211 are arranged opposite to and spaced apart from each other in the second direction Y, and the guide gap 212 formed between the two guide bars 211 is used for the guide mating member 14 at the bottom of the loading trolley 10 to slide. In this way, the guide structure 21 can guide the movement of the loading trolley 10, which facilitates the loading trolley 10 to accurately reach the preset position.

The guide structure 21 may be fixed to the ground, or may be fixed to a fixed base such as a bottom plate 213. Optionally, the two guide bars 211 are both arranged on the bottom plate 213, and the bottom plate 213 is fixed to the ground, to fix the position of the guide structure 21.

By adopting the above technical solution, the guide structure 21 can guide the guide mating member 14 at the bottom of the loading trolley 10 by using the two guide bars 211, which facilitates the loading trolley 10 to reach an accurate preset position, and the guide structure 21 has the advantages of a simple structure and easy implementation.

In other embodiments, the guide structure 21 is not limited thereto. For example, the guide structure 21 may also include a limiting guide rail for limiting a side portion of the loading trolley 10, as long as the guide structure 21 can guide the loading trolley 10.

In some embodiments, the guide mating member 14 is a positioning bearing.

Positioning bearings, also referred to as fixed bearings, refer to a type of bearings axially fixed and not allowed to move axially in mechanical engineering. Such bearings are primarily used to accurately determine and maintain the predetermined position of a shaft within a machine or an apparatus, ensuring accurate and reliable axial positioning of the shaft. They are typically tightly fixed to the shaft by adapter sleeves, screws, or other means, such that axial movement of the shaft does not occur during operation.

Optionally, the size of the outer diameter of the positioning bearing is adapted to the width of the guide gap 212, such that the positioning bearing can slide against the guide bar 211.

The guide mating member 14 provided by the embodiments of the present application is a positioning bearing. The positioning bearing can slide smoothly between the two guide bars 211, and the guide structure 21 cooperates with the guide mating member 14, such that the loading trolley 10 can be guided without causing large friction to the loading trolley 10, thereby facilitating smooth movement of the loading trolley 10 to the preset position.

In other embodiments, the fine positioning member 222 may also be of another structure. For example, the fine positioning member 222 may also be of a structure such as a universal ball, a positioning block, or the like.

With continued reference to FIGs. 3, 4, and 6, in some embodiments, the side of the guide bar 211 facing the guide gap 212 is provided with an arc-shaped guide surface 2111, and the arc-shaped guide surface 2111 is located at the end portion of the guide bar 211 facing away from the fine positioning member 222. A spacing between the two arc-shaped guide surfaces 2111 gradually decreases in a direction in which the first direction X points to the fine positioning member 222.

It can be understood that the arc-shaped guide surface 2111 is located on the side of the guide bar 211 distal to the preset position of the loading trolley 10, that is, the guide mating member 14 of the loading trolley 10 first contacts the arc-shaped guide surface 2111 and then moves along the guide bar 211. The two arc-shaped guide surfaces 2111 enable the head end of the guide structure 21 to form a shape of a horn mouth, which can guide the guide mating member 14 to enter the guide gap 212, so as to adjust the traveling direction of the loading trolley 10.

By adopting the above technical solution, an end portion of the guide structure 21 is provided with an arc-shaped guide surface 2111, which can guide the guide mating member 14 to smoothly enter the guide gap 212, so as to adjust the traveling direction of the loading trolley 10 to enable the loading trolley 10 to reach the preset position along the guide structure 21, thereby improving the movement accuracy and the positioning accuracy of the loading trolley 10.

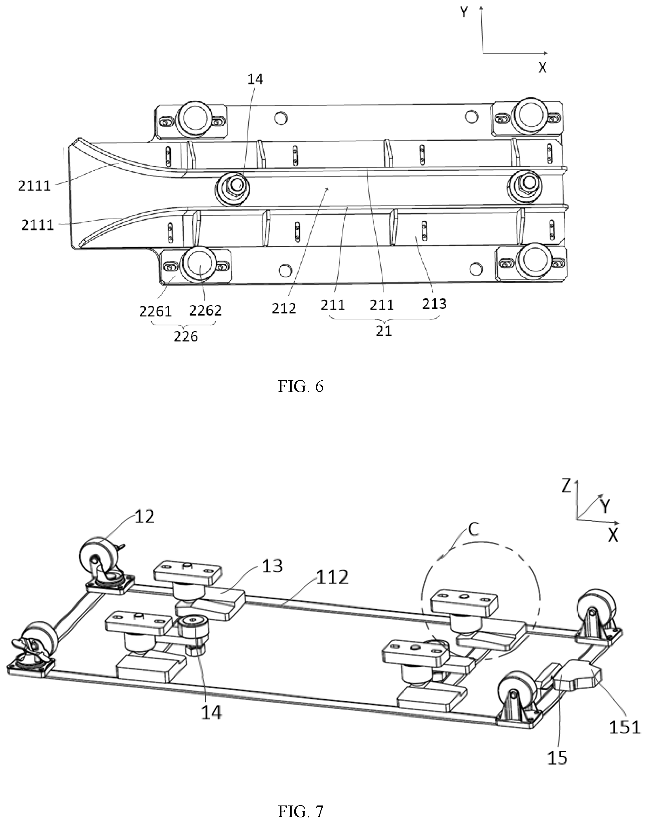

Referring to FIGs. 3 and 6, in some embodiments, at least two guide mating members 14 are provided, and the at least two guide mating members 14 are spaced apart from each other in the first direction X.

In this embodiment, two guide mating members 14 are provided, and the two guide mating members 14 are spaced apart from each other at the bottom of the loading trolley 10 in the first direction X.

By providing a plurality of guide mating members 14, the loading trolley 10 can move along the guide structure 21 under the cooperation of the guide mating members 14 and the guide structure 21, thereby improving the guiding accuracy.

In other embodiments, one, two, or more guide mating members 14 may be provided.

Referring to FIGs. 1 to 5, in some embodiments, the positioning structure 22 further includes a positioning driving member 223 arranged on the positioning bracket 221 and an ejector member 224 connected to the positioning driving member 223; the positioning driving member 223 is configured to drive the ejector member 224 to move, such that the ejector member 224 applies a force to the loading trolley 10, and then the loading trolley 10 is fixedly attached to the positioning bracket 221.

The positioning driving member 223 may include a cylinder, and may also include other mechanisms capable of driving the ejector member 224 to move. The ejector member 224 may be in various shapes, such as a block shape, a column shape, or the like.

When the loading trolley 10 moves to the preset position, the fine positioning member 222 clamps the positioning mating member 15. At this time, the positioning driving member 223 drives the ejector member 224 to move toward the loading trolley 10, and the ejector member 224 applies a force to the loading trolley 10, such that the loading trolley 10 is fixedly attached to the positioning bracket 221. In this way, the ejector member 224 can have a clasping function, avoiding displacement of the loading trolley 10. When the loading trolley 10 needs to be moved away, the positioning driving member 223 drives the ejector member 224 away from the loading trolley 10, so as to release the fixing effect on the loading trolley 10.

Optionally, the ejector member 224 can eject the crossbeam at the bottom of the loading trolley 10, such that the crossbeam is attached to the positioning bracket 221. It can be understood that the ejector member 224 may also eject other portions of the loading trolley 10, such that the loading trolley 10 is attached to the positioning bracket 221.

Optionally, a plurality of sets of ejector members 224 may also be provided and are located on two opposite sides of the loading trolley 10, such that the ejector members 224 arranged opposite to each other jointly clamp the loading trolley 10 and the positioning bracket 221.

The positioning structure 22 provided by the embodiments of the present application includes a positioning driving member 223 and an ejector member 224. The positioning driving member 223 can drive the ejector member 224 to move, such that the loading trolley 10 is fixedly attached to the positioning bracket 221, and the loading trolley 10 can be fixed at the positioning bracket 221, thereby avoiding displacement and shaking of the loading trolley 10.

With continued reference to FIGs. 1 to 5, in some embodiments, one end of the ejector member 224 is rotatably connected to the positioning driving member 223, and the other end thereof is a free end for ejecting the loading trolley 10; the positioning driving member 223 is configured to drive the ejector member 224 to rotate, such that the free end swings and ejects the loading trolley 10.

The positioning driving member 223 may include a cylinder and a connecting rod structure connected to the cylinder. The positioning driving member 223 can drive one end of the ejector member 224 to rotate, thereby enabling the free end to swing up and down. When the loading trolley 10 needs to be fixed, the positioning driving member 223 drives the ejector member 224 to rotate downward, and the ejector member 224 enables the bottom of the loading trolley 10 to be attached to the positioning bracket 221. When the loading trolley 10 needs to be moved away, the positioning driving member 223 drives the ejector member 224 to rotate upward, and the free end of the ejector member 224 can be away from the loading trolley 10 to provide clearance for the loading trolley 10.

By adopting the above technical solution, the ejector member 224 can rotate to fix the loading trolley 10 and provide clearance for the loading trolley 10, thereby facilitating the use.

In some embodiments, the positioning bracket 221 is provided with a sensor 225, the sensor 225 is configured to sense the loading trolley 10 and send a sensing signal, and the positioning driving member 223 drives the ejector member 224 to move according to the sensing signal.

The sensor 225 is configured to sense the loading trolley 10 to detect whether the loading trolley 10 reaches the preset position. The sensor 225 may be a proximity sensor, an infrared distance sensor, an ultrasonic sensor, an image recognition sensor, a radio frequency identification sensor, or the like. The sensor 225 can send a sensing signal after sensing the loading trolley 10, and the positioning driving member 223 drives the ejector member 224 to move according to the sensing signal, such that the ejector member 224 fixes the loading trolley 10.

By providing the sensor 225, the positioning driving member 223 can control the ejector member 224 to fix the loading trolley 10 in time, thereby improving the positioning efficiency.

Referring to FIGs. 1, 3, 4, 7, and 8, in some embodiments, the positioning apparatus 20 further includes a limiting member 226, the bottom of the loading trolley 10 is provided with a limiting mating member 13, and the limiting member 226 is configured to clamp the limiting mating member 13 so as to fix the loading trolley 10 at the preset position.

The limiting member 226 may be arranged on the bottom plate 213 of the guide structure 21, such that the loading trolley 10 will be directly limited by the limiting member 226 when moving along the guide structure 21 to the preset position. It can be understood that the limiting member 226 may also be fixed to the ground or other fixed bases. The limiting mating member 13 is arranged at the bottom of the loading trolley 10, and the bottom of the loading trolley 10 refers to a lower portion of the loading trolley 10 in the normal placement and traveling state of the loading trolley 10.

When the loading trolley 10 moves to the preset position, the limiting member 226 is configured to clamp the limiting mating member 13 at the bottom of the loading trolley 10 so as to position the loading trolley 10. The limiting member 226 may be of various structures. For example, the limiting member 226 is a positioning block with a clamping function, a positioning pin, a universal ball bull eye bearing 2262, or the like. The structure of the limiting mating member 13 is adapted to the limiting member 226, such that the limiting member 226 can clamp the limiting mating member 13.

During use, before the loading trolley 10 moves to the preset position, the limiting member 226 does not provide a clamping effect, so as to prevent the limiting member 226 from obstructing the movement of the loading trolley 10; when the loading trolley 10 moves to the preset position, the limiting mating member 13 moves to the limiting member 226, and the limiting member 226 and the limiting mating member 13 are clamped with each other to prevent the loading trolley 10 from continuing to move, such that the loading trolley 10 can stop at the preset position.

By adopting the above technical solution, the limiting member 226 can clamp the limiting mating member 13 so as to fix the loading trolley 10 at the preset position, thereby achieving accurate positioning of the loading trolley 10.

Since both the limiting member 226 and the fine positioning member 222 can position the loading trolley 10, the positioning structure 22 may include only one or both of the limiting member 226 and the fine positioning member 222.

Referring to FIGs. 2, 3, 7, and 8, in some embodiments, the side of the limiting mating member 13 facing the limiting member 226 is provided with an inclined guide surface 131 and a clamping surface 132 connected with each other in the first direction X. The height of the inclined guide surface 131 gradually decreases from an end distal to the clamping surface 132 toward a direction close to the clamping surface 132, and the height of the clamping surface 132 is lower than the height of the inclined guide surface 131. The limiting member 226 can enter the clamping surface 132 along the inclined guide surface 131 and abut against the clamping surface 132.

The first direction X is the extension direction of the guide structure 21, and is also the movement direction of the loading trolley 10. The extension direction of the inclined guide surface 131 is inclined relative to the first direction X, and the inclined guide surface 131 is inclined relative to the limiting member 226. The height of the inclined guide surface 131 gradually decreases from the end distal to the clamping surface 132 toward the direction close to the clamping surface 132, where the height of the inclined guide surface 131 is a height of the inclined guide surface 131 in the vertical direction (the third direction Z).

When the loading trolley 10 moves in the first direction X, the limiting member 226 first contacts the inclined guide surface 131 and then contacts the clamping surface 132, that is, the inclined guide surface 131 slides relative to the limiting member 226 until the limiting member 226 abuts against the clamping surface 132, and the loading trolley 10 is positioned and no longer moves. In this way, each time the loading trolley 10 moves to the positioning structure 22, the stopping position of the loading trolley 10 is accurately fixed. Compared with the manner of manually determining the stopping position, the trolley positioning apparatus 100 improves the positioning accuracy of the loading trolley 10.

By adopting the above technical solution, the limiting mating member 13 is provided with an inclined guide surface 131 and a clamping surface 132, and the limiting member 226 can abut against the clamping surface 132 to prevent the loading trolley 10 from continuing to move, such that the loading trolley 10 is accurately positioned, thereby improving the positioning accuracy of the loading trolley 10.

In other embodiments, the structure of the limiting mating member 13 is not limited thereto. For example, the side of the limiting mating member 13 facing the limiting member 226 is provided with a clamping groove 2221, and the limiting member 226 can be clamped with the clamping groove 2221 to position the loading trolley 10.

Referring to FIGs. 2 to 8, in some embodiments, the limiting member 226 includes a mounting member 2261 and a universal ball bull eye bearing 2262 arranged on the mounting member 2261. The universal ball bull eye bearing 2262 is configured to support and position the limiting mating member 13.

The mounting member 2261 may be fixed to the guide structure 21, or may be fixed to a fixed base such as the ground. The mounting member 2261 is configured to mount the universal ball bull eye bearing 2262. The mounting member 2261 may be in a plate shape, a block shape, a box shape, or other shapes.

The "universal ball bull eye bearing" is a special universal ball bearing, which combines the characteristics of a universal ball and a bull eye bearing. Such a bearing typically includes one or more large-diameter spheres (similar to a "bull eyes") that are placed in a groove or bracket, allowing an object to achieve omni-directional rotational and translational motion at the contact point. In a specific application, the universal ball bull eye bearing 2262 can bear loads from different directions, and can flexibly adjust the angle of the bearing surface, so it is very useful in situations where high flexibility and heavy load capacity are required, such as in a conveying system, a worktable platform support, a material handling device, and any mechanical structure that requires free rolling and multi-directional rotation. The universal ball bull eye bearing 2262 has design features that help reduce friction, increase efficiency, and prolong the service life of the device.

The embodiments of the present application provide a specific structure of the limiting member 226. The limiting member 226 includes a mounting member 2261 and a universal ball bull eye bearing 2262. The mounting member 2261 is configured to mount the universal ball bull eye bearing 2262. The universal ball bull eye bearing 2262 can support and position the limiting mating member 13. The friction between the universal ball bull eye bearing 2262 and the inclined guide surface 131 is small, such that the carrying trolley can smoothly slide above the universal ball bull eye bearing 2262 until the highest point of the universal ball bull eye bearing 2262 abuts against the abutting surface, thereby achieving a positioning purpose.

Referring to FIGs. 3, 4, and 9, in some embodiments, a plurality of limiting members 226 and a plurality of limiting mating members 13 are provided and are arranged in a one-to-one correspondence manner. The vertexes of a plurality of universal ball bull eye bearings 2262 are located in the same horizontal plane but are not all on the same straight line, and the plurality of universal ball bull eye bearings 2262 jointly support the loading trolley 10.

A plurality of limiting members 226 are provided, and the plurality of limiting members 226 are spaced apart from each other. A plurality of limiting mating members 13 are also provided, and the plurality of limiting mating members 13 are spaced apart from each other. The limiting members 226 and the limiting mating members 13 are arranged in a one-to-one correspondence manner, which means that each limiting member 226 is configured to position one limiting mating member 13.

For example, in this embodiment, four limiting members 226 and four limiting mating members 13 are provided, and four universal ball bull eye bearings 2262 jointly support the loading trolley 10.

It can be understood that three, five, or six limiting members 226 may be provided. Correspondingly, three, five, or six limiting mating members 13 may be provided.

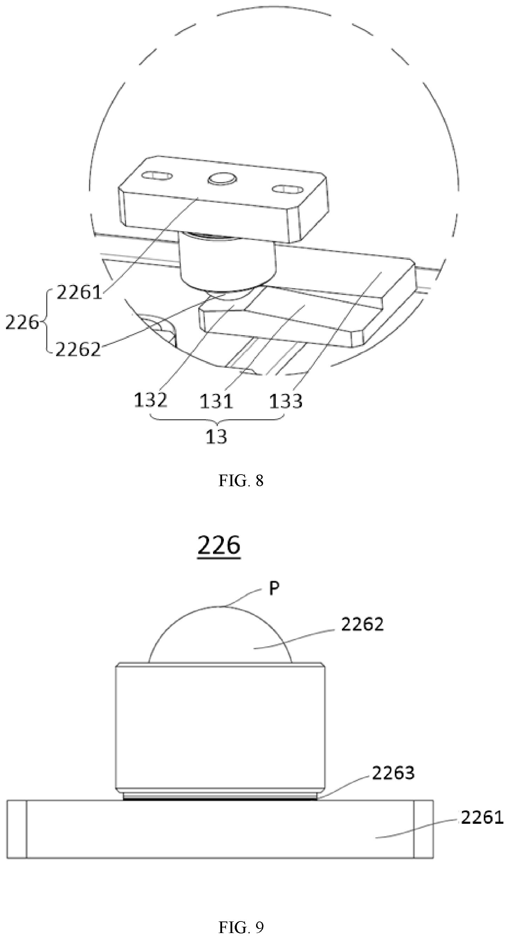

The vertex (point P in FIG. 9) of each of the plurality of universal ball bull eye bearings 2262 is the highest point of the universal ball bull eye bearing 2262. The vertexes of the plurality of universal ball bull eye bearings 2262 are located in the same horizontal plane, that is, the vertexes of the plurality of universal ball bull eye bearings 2262 are arranged at the same height, that is, the vertexes of the plurality of universal ball bull eye bearings 2262 are at the same horizontal height. The vertexes of the plurality of universal ball bull eye bearings 2262 are not all on the same straight line, such that the plurality of vertexes can jointly define a horizontal plane. In this way, when the plurality of limiting members 226 separately clamp the corresponding limiting mating members 13, the levelness of the loading trolley 10 is corrected, and the loading trolley 10 can remain horizontal, such that the items carried on the loading trolley 10 can be placed horizontally, facilitating subsequent grabbing of the items or other operations.

The positioning apparatus 20 provided by the embodiments of the present application includes a plurality of limiting members 226, and the loading trolley 10 is provided with a plurality of limiting mating members 13. Since the vertexes of the plurality of universal ball bull eye bearings 2262 are located in the same horizontal plane, the plurality of universal ball bull eye bearings 2262 jointly support the loading trolley 10, and the levelness of the loading trolley 10 is corrected. Even if the ground of the preset position is uneven, the loading trolley 10 can still maintain the levelness. The trolley positioning apparatus 100 not only uses the plurality of limiting members 226 to accurately position the loading trolley 10, but also can keep the loading trolley 10 horizontal, thus achieving the horizontal correction function.

In other embodiments, the structure of the limiting member 226 is not limited thereto. For example, the limiting member 226 may also include a wedged surface, the wedged surface being parallel to the inclined guide surface 131. When the highest point of the wedged surface abuts against the clamping surface 132, the limiting member 226 can also limit the loading trolley 10 from continuing to move.

In some embodiments, four limiting members 226 and four limiting mating members 13 are provided, two sides of the guide structure in the second direction Y are each provided with two limiting members 226, and the two limiting members 226 on each side are spaced apart from each other in the first direction X; two sides of the loading trolley 10 in the second direction Y are each provided with two limiting mating members 13, and the two limiting mating members 13 on each side are spaced apart from each other in the first direction X.

In this way, the four limiting members 226 cooperate with the four limiting mating members 13 to simultaneously limit the loading trolley 10 in the first direction X and the second direction Y, and the vertexes of the universal ball bull eye bearings 2262 in the four limiting members 226 are in the same horizontal plane, which enables horizontal correction of the loading trolley 10.

As shown in FIG. 9, in some embodiments, several limiting members 226 further include gaskets 2263, the gaskets 2263 are detachably arranged between the mounting members 2261 and the universal ball bull eye bearings 2262, and the gaskets 2263 are configured to increase the height of the universal ball bull eye bearings 2262.

One or more gaskets 2263 may be provided in the limiting member 226. The gaskets 2263 may be flexible gaskets 2263 or hard gaskets 2263. The universal ball bull eye bearing 2262 and the gasket 2263 are detachably connected to the mounting member 2261 to facilitate the mounting of the gasket 2263.

Since the ground of the preset position the loading trolley 10 needs to reach may be uneven, the four corners of the loading trolley 10 may not be balanced, which affects the robotic arm subsequently grabbing the items on the loading trolley 10, and even causes the items to fall and be damaged. In the solutions provided by the embodiments of the present application, before the loading trolley 10 arrives, the plurality of limiting members 226 are horizontally calibrated in advance, and the gaskets 2263 are arranged in several limiting members 226, such that the vertexes of the plurality of universal ball bull eye bearings 2262 are flush and in the same horizontal plane. In this way, when the loading trolley 10 is positioned by the plurality of universal ball bull eye bearings 2262, the loading trolley 10 can remain horizontal, thereby avoiding the problem of items colliding or falling due to unevenness of the front, rear, left, and right sides of the placement platform of the loading trolley 10, or the robotic arm being unable to accurately grab the items.

Referring to FIG. 8, in some embodiments, the side of the limiting mating member 13 facing the limiting member is further provided with a limiting surface 133. The clamping surface 132 and the inclined guide surface 131 are arranged on the same side (the side in the second direction Y) of the limiting surface 133, the second direction Y intersects with the first direction X, and the inclined guide surface 131 is recessed relative to the limiting surface 133.

The first direction X may be the length direction of the loading trolley 10, and the second direction Y may be the width direction of the loading trolley 10. The inclined guide surface 131 is recessed relative to the limiting surface 133, which means that the inclined guide surface 131 is recessed toward the top direction of the loading trolley 10, and the height of the limiting surface 133 is lower than the height of the inclined guide surface 131. In this way, the inclined guide surface 131 forms a groove on the limiting mating member 13, and when the loading trolley 10 moves on the limiting member 226, the universal ball bull eye bearing 2262 can slide relative to the inclined guide surface 131 and is not easy to deviate, thereby further improving the movement accuracy of the loading trolley 10.

Referring to FIGs. 1 to 9, some embodiments of the present application provide a trolley positioning apparatus 100, including a loading trolley 10 and a positioning apparatus 20; the positioning apparatus 20 includes a guide structure 21 and a positioning structure 22; the positioning structure 22 includes a positioning bracket 221 and a fine positioning member 222 arranged on the positioning bracket 221; a positioning mating member 15 is arranged on the loading trolley 10, and the fine positioning member 222 is configured to be clamped with the positioning mating member 15. The positioning structure 22 further includes a positioning driving member 223 arranged on the positioning bracket 221 and an ejector member 224 connected to the positioning driving member 223; the positioning driving member 223 is configured to drive the ejector member 224 to move, such that the ejector member 224 applies a force to the loading trolley 10, and then the loading trolley 10 is fixedly attached to the positioning bracket 221.

During use, the guide mating member 14 of the loading trolley 10 enters the guide gap 212 of the guide structure 21, and the structure of the guide structure 21 performs rough positioning on the loading trolley 10; after the loading trolley 10 is in place, if there is a deviation in the position of the loading trolley 10, the fine positioning member 222 can correct the position of the loading trolley 10 until the positioning mating member 15 and the fine positioning member 222 are clamped with each other to achieve fine positioning; then, the positioning driving member 223 drives the ejector member 224 to move to fixedly attach the loading trolley 10 to the positioning bracket 221.

In the trolley positioning apparatus 100, the guide structure 21 can guide the loading trolley 10 to move, playing a rough positioning role; the fine positioning member 222 can be clamped with the positioning mating member 15 on the loading trolley 10, playing a fine positioning role; and the positioning driving member 223 and the ejector member 224 can clasp the loading trolley 10, playing a parallel positioning role. Therefore, the positioning apparatus 20 can accurately position the loading trolley 10.

The positioning apparatus 20 further includes a limiting member 226; the bottom of the loading trolley 10 is provided with a limiting mating member 13; and the side of the limiting mating member 13 facing the limiting member 226 is provided with an inclined guide surface 131 and a clamping surface 132. The height of the inclined guide surface 131 gradually decreases from an end distal to the clamping surface 132 toward a direction close to the clamping surface 132, and the height of the clamping surface 132 is lower than the height of the inclined guide surface 131. The loading trolley 10 can move above the limiting member 226 until the limiting member 226 abuts against the clamping surface 132. The limiting member 226 includes a mounting member 2261 and a universal ball bull eye bearing 2262 arranged on the mounting member 2261. A plurality of limiting members 226 and a plurality of limiting mating members 13 are provided. The vertexes (points P) of the plurality of universal ball bull eye bearings 2262 are located in the same horizontal plane, and the plurality of universal ball bull eye bearings 2262 jointly support the loading trolley 10. A positioning mating member 15 is arranged on the loading trolley 10, and when the loading trolley 10 is attached to the positioning bracket 221, the positioning mating member 15 is clamped with the fine positioning member 222 in the first direction X.

The trolley positioning apparatus 100 further includes a limiting member 226. The limiting member 226 can accurately position the loading trolley 10, and the plurality of limiting members 226 jointly adjust the levelness of the loading trolley 10, such that the loading trolley 10 can remain horizontal, and the items carried on the loading trolley 10 can be placed horizontally, facilitating subsequent grabbing of the items or other operations. The trolley positioning apparatus 100 has both positioning and horizontal correction functions, improving the positioning accuracy and horizontal accuracy of the loading trolley 10.

Referring to FIGs. 1 to 9, the loading trolley 10 includes a trolley body 11 and a plurality of wheels 12. An armrest 111 is arranged at the upper portion of the trolley body 11, and the limiting mating member 13 and the positioning mating member 15 are arranged at the bottom of the trolley body 11. Optionally, the bottom of the trolley body 11 is provided with a fixed frame 112, and the limiting mating member 13 and the positioning mating member 15 are both arranged on the fixed frame 112. In this way, the loading trolley 10 has a simple structure and is easy to assemble.

An embodiment of a second aspect of the present application provides a battery manufacturing device, including the trolley positioning apparatus 100 provided in the first aspect.

The loading trolley 10 in the trolley positioning apparatus 100 may be used for loading a battery module, for example, loading a defective NG battery module.

The battery manufacturing device further includes a robotic arm, and the robotic arm is arranged on one side of a positioning mechanism for grabbing the battery module on the loading trolley 10. Since the trolley positioning apparatus 100 can accurately position the loading trolley 10, the robotic arm can accurately grab the battery module, thereby solving the problem of mistaken grabbing and placement caused by inaccurate positioning of the loading trolley 10, and avoiding potential safety hazards caused by collision of and damage to the battery module.

The above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some of the technical features; however, these modifications or substitutions do not make the essence of the corresponding technical solutions deviate from the spirit and scope of the technical solutions in the embodiments of the present application, and should all fall within the scope of protection of the present application.

## Claims

1. A trolley positioning apparatus, comprising:
a loading trolley; and
a positioning apparatus, comprising a guide structure and a positioning structure, wherein the guide structure is configured to guide the loading trolley, such that the loading trolley travels along the guide structure; the positioning structure is configured to fix the loading trolley.

2. The trolley positioning apparatus according to claim 1, wherein the guide structure extends in a first direction, and the positioning structure comprises a positioning bracket and a fine positioning member arranged on the positioning bracket; a positioning mating member is arranged on the loading trolley, and the fine positioning member is configured to be engaged with the positioning mating member.

3. The trolley positioning apparatus according to claim 2, wherein a side of one of the fine positioning member and the positioning mating member in the first direction is concavely provided with a clamping groove, a side of the other of the fine positioning member and the positioning mating member in the first direction is provided with a clamping protrusion, and the clamping protrusion can be fitted into the clamping groove.

4. The trolley positioning apparatus according to claim 3, wherein the clamping groove comprises two guide walls and a bottom wall connected between the two guide walls, the two guide walls are arranged opposite to each other in a second direction and are obliquely connected to the bottom wall, the second direction intersects with the first direction, and a width of the clamping groove gradually decreases in the first direction toward a direction away from the positioning mating member.

5. The trolley positioning apparatus according to any one of claims 2 to 4, wherein the guide structure comprises two guide bars arranged opposite to and spaced apart from each other, the guide bars extend in the first direction, and a guide gap extending in the first direction is formed between the two guide bars;
a bottom of the loading trolley is provided with a guide mating member, and the guide mating member can slide in the guide gap.

6. The trolley positioning apparatus according to claim 5, wherein the guide mating member is a positioning bearing.

7. The trolley positioning apparatus according to claim 5 or 6, wherein a side of the guide bar facing the guide gap is provided with an arc-shaped guide surface, and the arc-shaped guide surface is located at an end portion of the guide bar facing away from the fine positioning member;
a spacing between the two arc-shaped guide surfaces gradually decreases in a direction in which the first direction points to the fine positioning member.

8. The trolley positioning apparatus according to any one of claims 2 to 7, wherein the positioning structure further comprises a positioning driving member arranged on the positioning bracket and an ejector member connected to the positioning driving member; the positioning driving member is configured to drive the ejector member to move, such that the ejector member applies a force to the loading trolley, and then the loading trolley is fixedly attached to the positioning bracket.

9. The trolley positioning apparatus according to claim 8, wherein one end of the ejector member is rotatably connected to the positioning driving member, and the other end thereof is a free end for ejecting the loading trolley; the positioning driving member is configured to drive the ejector member to rotate, such that the free end swings and pushes against the loading trolley.

10. The trolley positioning apparatus according to claim 8, wherein the positioning bracket is provided with a sensor, the sensor is configured to sense the loading trolley and send a sensing signal, and the positioning driving member drives the ejector member to move according to the sensing signal.

11. The trolley positioning apparatus according to any one of claims 1 to 10, wherein the positioning structure comprises a limiting member, the bottom of the loading trolley is provided with a limiting mating member, and the limiting member is configured to clamp the limiting mating member so as to fix the loading trolley at a preset position.

12. The trolley positioning apparatus according to claim 11, wherein
a side of the limiting mating member facing the limiting member is provided with an inclined guide surface and a clamping surface connected with each other in a first direction, a height of the inclined guide surface gradually decreases from an end distal to the clamping surface toward a direction close to the clamping surface, and a height of the clamping surface is lower than a height of the inclined guide surface;
the limiting member can enter the clamping surface along the inclined guide surface and abut against the clamping surface.

13. The trolley positioning apparatus according to claim 12, wherein the limiting member comprises a mounting member and a universal ball bull eye bearing arranged on the mounting member, and the universal ball bull eye bearing is configured to support and position the limiting mating member.

14. The trolley positioning apparatus according to claim 13, wherein a plurality of the limiting members and a plurality of the limiting mating members are provided, vertexes of a plurality of the universal ball bull eye bearings are located in a same horizontal plane but are not all on a same straight line, and the plurality of universal ball bull eye bearings jointly support the loading trolley.

15. The trolley positioning apparatus according to claim 14, wherein
two sides of the guide structure in a second direction are each provided with two limiting members, the two limiting members on each side are spaced apart from each other in a first direction, and the second direction intersects with the first direction;
two sides of the loading trolley in the second direction are each provided with two limiting mating members, and the two limiting mating members on each side are spaced apart from each other in the first direction.

16. The trolley positioning apparatus according to any of claims 13 to 15, wherein several of the limiting members further comprise gaskets, the gaskets are detachably arranged between the mounting members and the universal ball bull eye bearings, and the gaskets are configured to increase the height of the universal ball bull eye bearings.

17. The trolley positioning apparatus according to any one of claims 12 to 16, wherein the side of the limiting mating member facing the limiting member is further provided with a limiting surface, the clamping surface and the inclined guide surface are arranged on a same side of the limiting surface, and the inclined guide surface is recessed relative to the limiting surface.

18. A battery manufacturing device, comprising the trolley positioning apparatus according to any one of claims 1 to 17.
